# EUROPEAN PATENT APPLICATION

(11) **EP 1 991 022 A1**
(43) Date of publication of application: **12.11.2008**
(21) Application number: 07737457.7
(22) Date of filing: 27.02.2007
(51) Int. Cl.: H04Q 7/38, H04B 7/26

(54) **MOBILE STATION, AND METHOD FOR NOTIFYING STATUS OF MOBILE STATION AND WIRELESS CHANNEL**

(30) Priority: 28.02.2006 JP 2006053646
(71) Applicant: NTT DoCoMo, Inc., Chiyoda-ku Tokyo 100-6150 (JP)
(72) Inventor: IWAMURA, Mikio, Tokyo 100-6150 (JP); ISHII, Minami, Tokyo 100-6150 (JP)
(74) Representative: HOFFMANN EITLE
(86) International application number: PCT/JP2007/053672
(87) International publication number: WO 2007/099967

(57) **Abstract**

A mobile station comprises a radio channel condition reporting unit reporting information indicative of a radio channel condition at a reception timing in discontinuous reception.

## Description

### TECHNICAL FIELD

The present invention relates to mobile stations, base stations and radio channel condition reporting methods in radio communication systems with discontinuously receiving mobile stations.

### BACKGROUND ART

HSDPA (High Speed Downlink Packet Access) standardized in 3GPP as a 3.5^{th} generation mobile communication scheme is a packet communication based downlink transmission scheme. In the HSDPA, user data is transmitted in a time divisional manner in a shared physical channel HS-PDSCH (High-Speed Physical Downlink Shared Channel) shared among multiple users in a cell.

Also in the HSDPA, the presence of data in the HS-PDSCH is reported in a shared control channel HS-SCCH (High-Speed Shared Control Channel).

A mobile station receives the HS-SCCH in a predetermined timing, and if the mobile station receives a signal to indicate that some data destined for that mobile station is in the HS-SCCH, the mobile station receives data by receiving the HS-PDSCH immediately after the reception of the signal.

Also, each mobile station transmits CQI (Channel Quality Indicator) indicative of the condition of a radio channel in an uplink dedicated physical channel HS-DPCCH (High-Speed Dedicated Physical Control Channel).

A base station performs scheduling to determine for which user the user data is to be transmitted in the next HS-PDSCH frame taking into account the CQIs and/or others for the mobile stations and also conducts link adaptation, such as MCS (Modulation and Coding Scheme) control and transmission power control, based on the CQIs.

Also, the base station transmits some information regarding a frame format indicative of the MCS of the HS-PDSCH in the HS-SCCH. Accordingly, the mobile stations can identify the demodulation and decoding scheme.

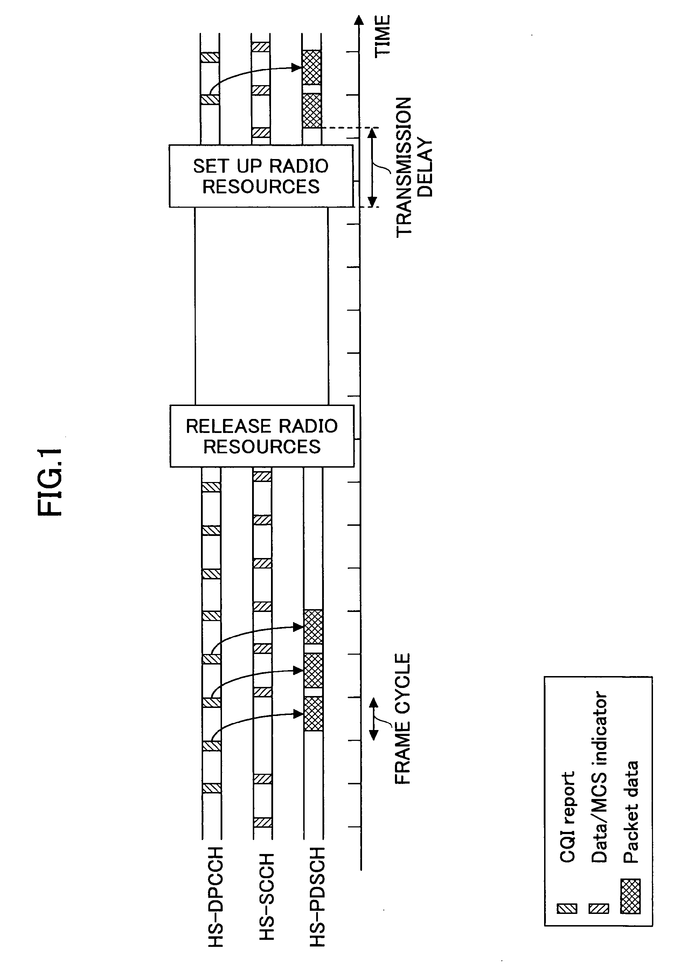

An exemplary operation of a radio communication system in compliance with the HSDPA scheme is described with reference to FIG. 1.

In the HSDPA scheme, the CQIs are periodically reported from mobile stations regardless of the presence of data. A base station performs the link adaptation depending on the CQIs to control transmission. If no data is received for a predetermined time period, the base station and the mobile stations may release radio resources in order to avoid reduction in utilization efficiency of the radio resources and consumption of battery energy of the mobile stations.

Subsequently, when some new downlink data is received in a transmission buffer, the base station and the mobile stations set up the radio resources in accordance with a predetermined procedure again to resume communications. Then, the base station transmits the first frame in a default format. In this case, data transmission may be delayed by a time period required to set up the radio resources.

In order to address this problem, discontinuous transmission (DTX) /discontinuous reception (DRX) may be applied in radio communication systems. In the DTX/DRX, if no data has been received for a predetermined time period, mobile stations activate DTX/DRX to decrease the frequency of transmissions and receptions. In this manner, it is possible to improve utilization efficiency of the radio resources and reduce consumption of battery energy of the mobile stations.

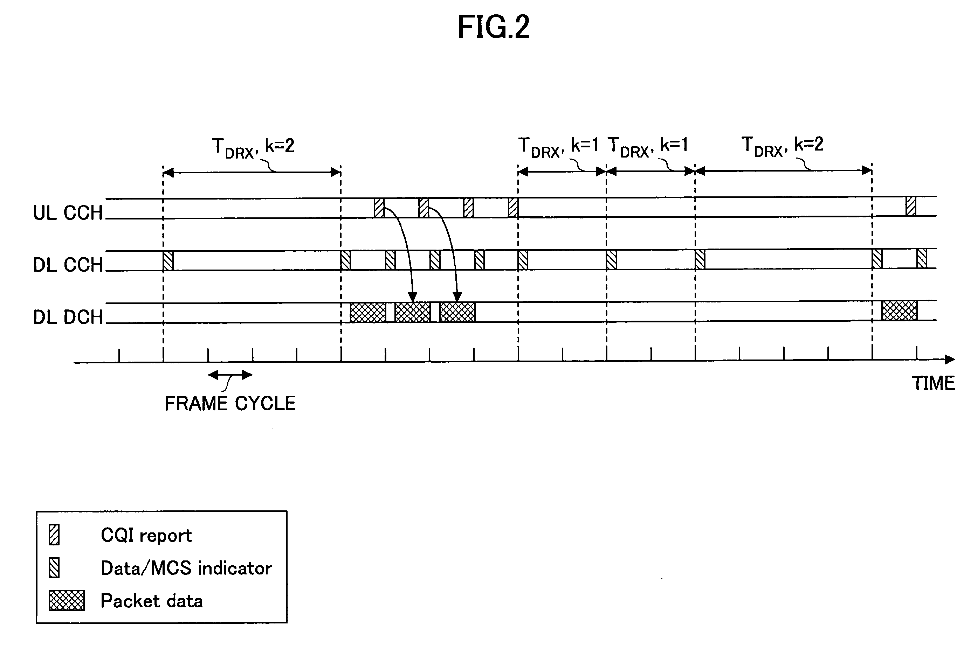

An exemplary radio communication system in compliance with the DTX/DRX is described with reference to FIG. 2.

In FIG. 2, the HS-PDSCH, the HS-SCCH and the HS-DPCCH are generalized into DL DCH, DL CCH and UL CCH, respectively. Also, the parameter T_{DRX} represents a predetermined cycle of the DRX (DRX cycle). The DRX cycle may be expressed in form of 2^{k} where k is a positive integer.

In this description, some dynamic type of the DTX/DRX is applied. In the dynamic DTX/DRX, if no data has been received in two consecutive frames under a certain DRX cycle T_{DRX}, the DRX cycle T_{DRX} is doubled.

For example, if no data is in two consecutive frames in the DL DCH, a mobile station sets the parameter k to be equal to 1 in the DRX cycle T_{DRX} and halts to transmit the CQI. Then, if no data is in two consecutive DRX cycles in the DL DCH, the DRX cycle is doubled (k=2).

Then, when some data destined for that mobile station is received, the base station transmits the first frame in a burst in a default format. In the subsequent frames where the CQI is available, the link adaptation is applied depending on the CQI.

The above-mentioned application of the DTX/DRX may enable a session to be maintained while establishing a line for a long time period without releasing and setting up radio resources, which may avoid complicated control for setting up the radio resources. Also, a quicker response before the transmission of the first frame in the burst can be achieved, which may efficiently avoid delay involved in the setting up of the radio resources.

### DISCLOSURE OF INVENTION

### [PROBLEM TO BE SOLVED BY THE INVENTION]

However, the above-mentioned prior techniques may have some problems as presented below.

In cases where the DTX/DRX is applied, a base station has no knowledge of the CQI at transmission of the first frame in response to reception of some data and thus cannot perform suitable link adaptation.

If the transmission cannot be conducted in the base station under appropriate MCS and/or transmission power, there is a higher risk that a mobile station may erroneously receive the DL CCH and/or the DL DCH.

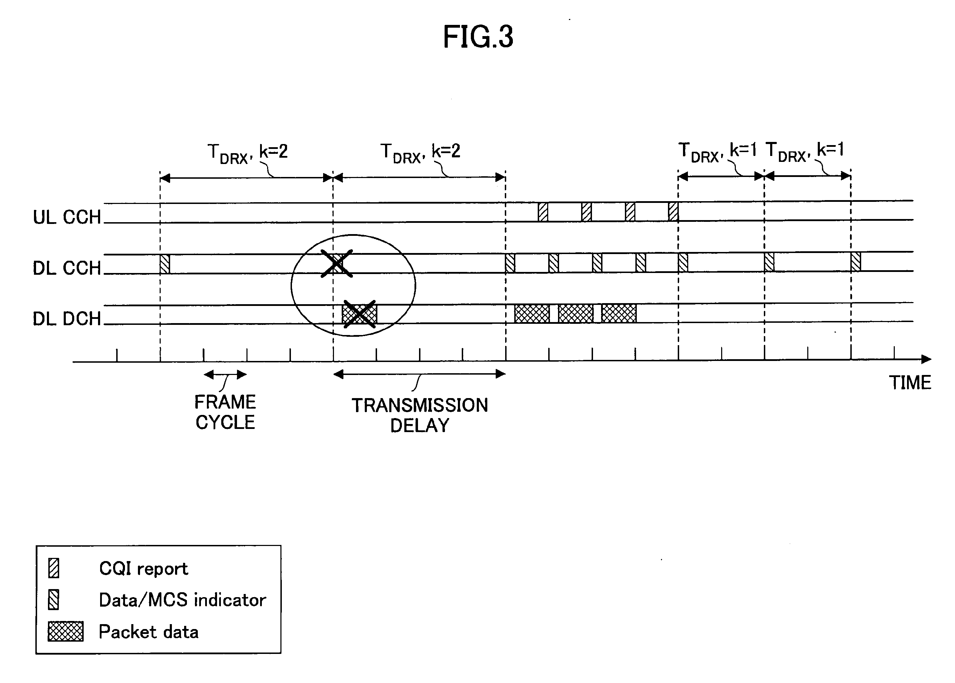

For example, as illustrated in FIG. 3, the base station must initiate the transmission without knowledge of the CQI, and thus no appropriate link adaptation can be applied. As a result, it is likely that the mobile station may erroneously receive the DL CCH and/or the DL DCH. If the mobile station erroneously receives the DL CCH, that is, if the DL CCH cannot be completely received, the mobile station cannot receive for one additional DRX cycle, resulting in larger delay.

Also if the DL CCH is erroneously received in the mobile station, the mobile station continues on the DRX. In this case, when the transmitting side (the base station) erroneously determines that the mobile station has returned from the DRX, there is a risk that the base station may unnecessarily transmit the DL CCH and/or the DL DCH.

Also if the DRX cycle is controlled to be gradually greater, the DRX cycle is made even if transmission of some data is desired, resulting in larger delay.

Also, the link adaptation cannot be appropriately applied, resulting in inefficient radio utilization.

The present invention addresses the above-mentioned problems. One object of the present invention is to provide a mobile station, a base station and a radio channel condition reporting method for enabling appropriate link adaptation to be applied even under the DRX.

### [MEANS FOR SOLVING THE PROBLEM]

In order to overcome the above-mentioned problems, one feature of the present invention relates to a mobile station, comprising: a radio channel condition reporting unit reporting information indicative of a radio channel condition at a reception timing (on duration) in discontinuous reception.

According to the feature, information indicative of a radio channel condition can be reported to a base station at a reception timing in discontinuous reception, for example, immediately before the reception timing.

One feature of the present invention relates to a base station comprising: a data channel generation unit generating a data channel; and a transmission control unit applying link adaptation depending on a radio channel condition reported from a mobile station a predetermined time before a transmission timing and transmitting the data channel.

According to the feature, link adaptation can be applied depending on a radio channel condition, such as a CQI, reported from a mobile station, and a data channel can be transmitted.

One feature of the present invention relates to a method of reporting a radio channel condition, the method comprising the steps of: a mobile station reporting information indicative of a radio channel condition depending on a reception timing in discontinuous reception; a base station generating a data channel; and the base station applying link adaptation depending on the radio channel condition reported from the mobile station a predetermined time before a transmission timing and transmitting the data channel.

According to the feature, the mobile station can report the information indicative of the radio channel condition at a reception timing in discontinuous reception, for example, immediately before the reception timing. The base station can apply the link adaptation depending on the radio channel condition, such as the CQI, reported from the mobile station and transmit the data channel.

### [ADVANTAGE OF THE INVENTION]

According to the embodiments of the present invention, it is possible to provide a mobile station, a base station and a radio channel condition reporting method for enabling appropriate link adaptation to be applied even under the DRX.

### BRIEF DESCRIPTION OF DRAWINGS

FIG. 1 is a schematic diagram illustrating a transmission method in compliance with the HSPDA scheme;
FIG. 2 is a schematic diagram illustrating DRX;
FIG. 3 is a schematic diagram illustrating DRX;
FIG. 4 is a schematic diagram illustrating a DRX method according to one embodiment of the present invention;
FIG. 5 is a block diagram illustrating a mobile station according to one embodiment of the present invention;
FIG. 6 is a flow diagram illustrating an operation of a mobile station according to one embodiment of the present invention;
FIG. 7 is a block diagram illustrating a base station according to one embodiment of the present invention; and
FIG. 8 is a flow diagram illustrating an operation of a base station according to one embodiment of the present invention.

### LIST OF REFERENCE SYMBOLS

- 100:: mobile station
- 200:: base station

### BEST MODE FOR CARRYING OUT THE INVENTION

Embodiments of the present invention will be described in detail with reference to the accompanying drawings below. Throughout the drawings, identical reference symbols are used for elements having the same functions, and descriptions thereof are not repeated.

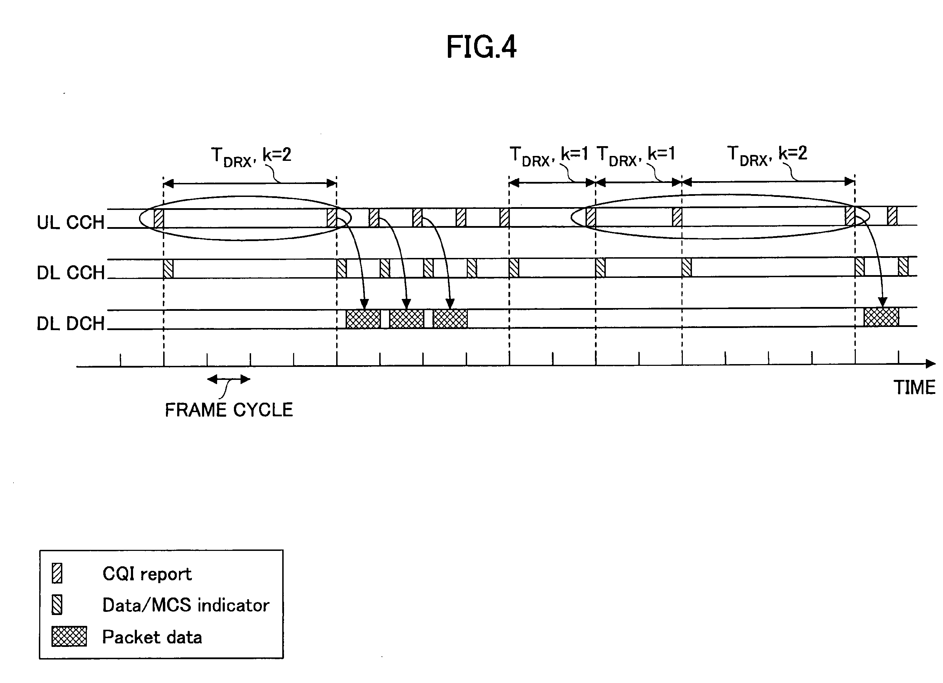

A radio communication system according to one embodiment of the present invention is described with reference to FIG. 4.

In this embodiment, the radio communication system includes a mobile station and a base station.

In this embodiment, it is supposed that data is transmitted in downlinks. In other words, the base station transmits a DL CCH (Downlink Control Channel) and a DL DCH (Downlink Data Channel) in downlinks while the mobile station transmits a UL CCH (Uplink Control Channel) in uplinks.

In the radio communication system of the present embodiment, the mobile station transmits a radio channel condition in an opposite link immediately before a reception timing of the DRX. For example, even when the DRX is in effect, the mobile station may report the radio channel condition, such as CQI, in the UL CCH immediately before the reception timing of the DL CCH.

The base station applies appropriate link adaptation from the first frame in a burst depending on the radio channel condition, such as the CQI, transmitted from the mobile station.

In this manner, the base station can obtain the CQI immediately before a transmission timing of the DL CCH, and thus appropriate link adaptation can be applied to at least one of the DL CCH and the DL DCH.

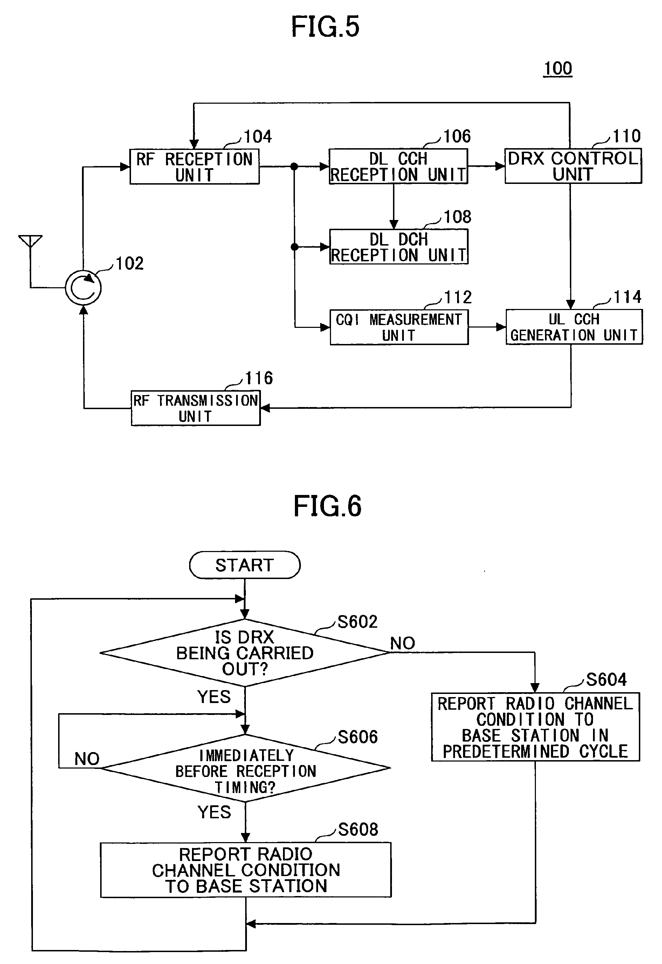

Next, a mobile station according to one embodiment of the present invention is described with reference to FIG. 5.

In this embodiment, a mobile station 100 includes a transmitter including a transmission and reception unit 102 with an antenna, a RF reception unit 104 receiving output signals of the transmission and reception unit 102, a DL CCH reception unit 106 receiving output signals of the RF reception unit 104, a DL DCH reception unit 108, a DRX control unit 110 serving as a DRX control unit receiving output signals of the DL CCH reception unit 106, a CQI measurement unit 112, a UL CCH generation unit 114 serving as a radio channel condition reporting unit receiving output signals of the DRX control unit 110 and the CQI measurement unit 112, and a RF transmission unit 116 receiving output signals of the UL CCH generation unit 114. Output signals of the DL CCH reception unit 106 are supplied to the DL DCH reception unit 108. Output signals of the DRX control unit 110 are supplied to the RF reception unit 104. Output signals of the RF transmission unit 116 are supplied to the transmission and reception unit 102.

Data transmitted from the base station 200 is supplied to the RF reception unit 104 via the transmission and reception unit 102. The RF reception unit 104 converts received downlink RF signals into baseband signals and supplies them to the DL CCH reception unit 106, the DL DCH reception unit 108 and the CQI measurement unit 112.

The DL CCH reception unit 106 receives DL CCHs. Also, the DL CCH reception unit 106 determines whether some data destined for its own mobile station is in the DL DCH based on the received DL CCH. Then, if the DL CCH reception unit 106 determines based on the DL CCH that some data destined for the mobile station is present, it extracts information indicative of MCS (Modulation Coding Scheme) of DL DCH frames from the DL CCH.

In addition, the DL CCH reception unit 106 reports received contents to the DL DCH reception unit 108 and the DRX control unit 110. For example, the DL CCH reception unit 106 reports information regarding the presence of received data to the DRX control unit 110 and supplies the MCS of the DL DCH frames to the DL DCH reception unit 108.

Also, the DL CCH reception unit 106 receives control commands indicating to enter a discontinuous reception condition, for example, from the base station 200 if the control commands are transmitted in the DL CCHs, and then supplies them to the DRX control unit 110.

The DL DCH reception unit 108 receives a DL DCH in accordance with the information, such as the MCS, reported by the DL CCH reception unit 106.

The DRX control unit 110 controls a DRX cycle based on the information reported from the DL CCH reception unit 106 for indicating the presence of some data destined for its own mobile station. For example, as described with reference to FIG. 1 and FIG. 2, if the DRX control unit 110 receives some signals in the DL CCH for indicating that no data is in multiple frames (hereinafter referred to as DRX frames), such as two consecutive frames, in the DL DCH, it controls the DRX cycle such that the DRX cycle becomes greater. For example, the DRX control unit 110 may double the DRX cycle.

Also, the DRX control unit 110 enters the discontinuous reception condition and controls the DRX cycle in accordance with the control commands supplied from the DL CCH reception unit 106 for indicating that the discontinuous reception condition is to be entered.

In addition, the DRX control unit 110 reports the radio channel condition at reception timings in the DRX. For example, the DRX control unit 110 may report the radio channel condition to the base station 200 at a predetermined time period before the reception timing in the DRX, for example, immediately before the reception timing. The CQI measurement unit 112 estimates the radio channel condition such as the CQI.

The UL CCH generation unit 114 generates frames to be transmitted in UL CCHs based on the radio channel condition, such as the CQI, and other control information.

Also, the UL CCH generation unit 114 generates control channels depending on control by the DRX control unit 110. For example, the UL CCH generation unit 114 generates and transmits the control channel by storing the information indicative of the radio channel condition in the UL CCH.

The RF transmission unit 116 converts the UL CCH and/or other uplink channels into RF signals and supplies them to an antenna to transmit the UL CCH and/or the other uplink channels.

Next, an operation of the mobile station 100 according to one embodiment of the present invention is described with reference to FIG. 6.

At step S602, the DRX control unit 110 determines whether DRX is being carried out.

If the DRX is not being carried out (S602: NO), the DRX control unit 110 controls the UL CCH generation unit 114 to report a radio channel condition to the base station 200 in a predetermined cycle. As a result, information indicative of the radio channel condition is periodically reported to the base station 200.

On the other hand, if the DRX is being carried out (S602: YES), at step S606, the DRX control unit 110 determines based on the DRX cycle whether the current time corresponds to a predetermined time period before the reception timing, for example, whether the current time is immediately before the reception timing.

If the current time is not immediately before the reception timing (S606: NO), the process control returns to step S606.

On the other hand, if the current time is immediately before the reception timing (S606: YES), at step S608, the DRX control unit 110 controls the UL CCH generation unit 114 to report the radio channel condition to the base station 200. As a result, the information indicative of the radio channel condition can be reported to the base station 200 immediately before the reception timing in the DRX cycle.

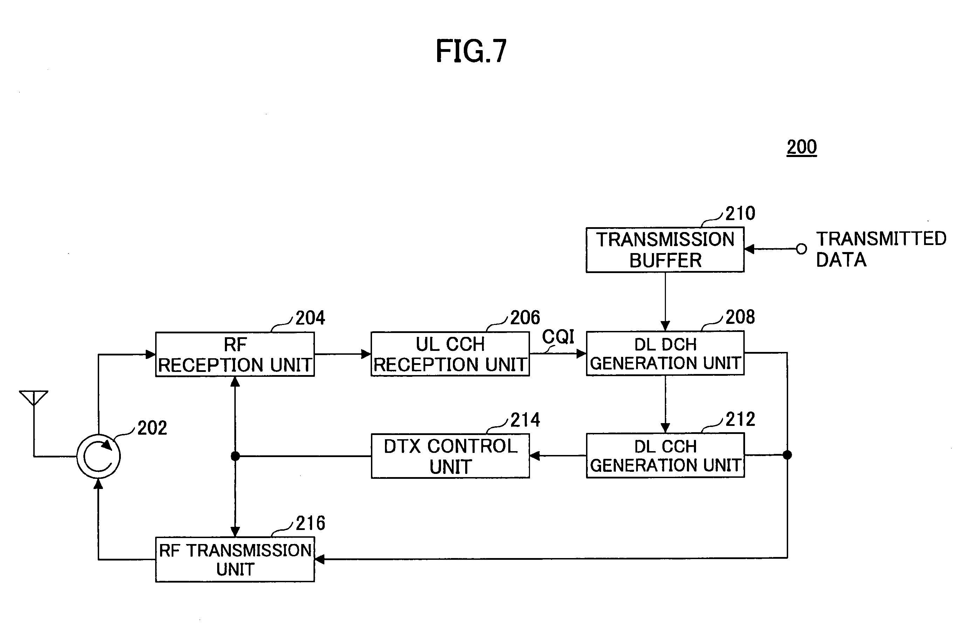

Next, the base station 200 according to one embodiment of the present invention is described with reference to FIG. 7.

In this embodiment, the base station 200 includes a receiver including a transmission and reception unit 202 with an antenna, a RF reception unit 204 receiving output signals of the transmission and reception unit 202, a UL CCH reception unit 206 receiving output signals of the RF reception unit 204, a DL DCH generation unit 208 serving as a data channel generation unit and a transmission control unit and receiving output signals of the UL CCH reception unit 206 and a transmission buffer 210, the transmission buffer 210 receiving transmitted data, a DL CCH generation unit 212 serving as a control channel generation unit and a transmission control unit and receiving output signals of the DL DCH generation unit 208, a DTX control unit 214 receiving output signals of the DL CCH generation unit 212, and a RF transmission unit 216 receiving output signals of the DL DCH generation unit 208 and the DL CCH generation unit 212. Output signals of the DTX control unit 214 are supplied to the RF reception unit 204 and the RF transmission unit 216. Output signals of the RF transmission unit 216 are supplied to the transmission and reception unit 202.

Data transmitted from the mobile station 100 is supplied to the RF reception unit 204 via the transmission and reception unit 202. The RF reception unit 204 converts received uplink RF signals into baseband signals and supplies them to the UL CCH reception unit 206.

The UL CCH reception unit 206 receives a UL CCH, extracts some information indicative of a radio channel condition, such as CQI information, from the UL CCH and supplies it to the DL DCH generation unit 208.

The DL DCH generation unit 208 generates a DL DCH frame and applies appropriate link adaptation based on the radio channel information, such as the CQI, supplied from the UL CCH reception unit 206 and the amount of data temporarily stored in the transmission buffer 210. Also, the DL DCH generation unit 208 reports to the DL CCH generation unit 212 information indicating that a frame for the CQI and the DL DCH has been generated.

The DL CCH generation unit 212, if a frame to be transmitted is generated in the DL DCH generation unit 208, stores information to report the presence of the data to be transmitted to the mobile station 100 and information indicative of a frame format required for demodulation and decoding in a DL CCH and applies appropriate link adaptation based on the CQI.

Also, if no data has been transmitted to the mobile station 100 for a predetermined time period, the DL CCH generation unit 212 may generate a control command to cause the mobile station 100 to enter a discontinuous reception condition and transmit the control command in a downlink control channel such as the DL CCH.

The DTX control unit 214 receives information indicative of transmission/non-transmission of the DL DCH from the DL CCH generation unit 212 and controls the DTX cycle depending on the information.

The transmission buffer 210 buffers downlink data incoming from networks until completion of the transmissions. Also, the transmission buffer 210 discards expiring data. In other words, the transmission buffer 210 discards data that has been kept for a predetermined time period.

The RF transmission unit 216 converts DL CCHs, DL DCHs and other downlink channels into RF signals and supplies them to an antenna. Thus, the DL CCHs, the DL DCHs and the other downlink channels can be transmitted.

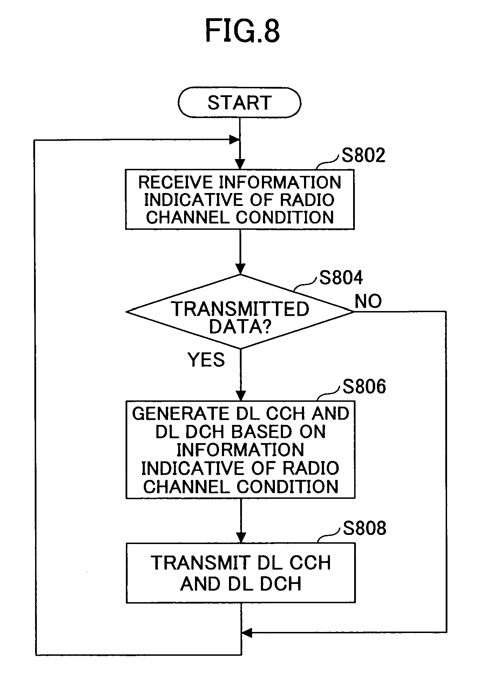

An operation of the base station 200 according to one embodiment of the present invention is described with reference to FIG. 8.

At step S802, the UL CCH reception unit 206 receives information indicative of a radio channel condition from a mobile station.

At step S804, the DL DCH generation unit 208 determines whether transmitted data is present with reference to the transmitted data temporarily stored in the transmission buffer 210.

If the transmitted data is present (S804: YES), the DL DCH generation unit 208 generates a DL DCH and applies appropriate link adaptation based on the information indicative of the radio channel condition. At step S806, the DL CCH generation unit 212 stores in the DL CCH information indicative of the presence of the transmitted data and information indicative of a frame format required to demodulate and decode the information indicative of the presence of the transmitted data.

At step S808, the DL CCH generation unit 212 applies appropriate link adaptation based on the radio channel information and transmits the DL CCH. Also, the DL DCH generation unit 208 applies appropriate link adaptation based on the radio channel information and transmits the DL DCH.

Then, the process control returns to step S802.

On the other hand, if no transmitted data is present (S804: NO), the process control returns to step S802.

Although common channels such as HSDPA are used in the above-mentioned embodiments, the present invention can be applied to DTX/DRX in communication implementations with dedicated channels such as WCDMA.

Also, the present invention can be applied to implementations where control channels and data channels may be mixed without disjunction into the DL CCH and the DL DCH.

Although the above-mentioned embodiments have been focused on downlinks, the present invention can be applied to uplinks. In this case, mobile stations are configured to include the receiver while base stations are configured to include the transmitter.

This international patent application is based on Japanese Priority Application No. 2006-053646 filed on February 28, 2006, the entire contents of which are hereby incorporated by reference.

### [Industrial Applicability]

A mobile station, a base station and a radio channel condition reporting method according to the present invention can be applied to radio communication systems.

## Claims

1. A mobile station, comprising:
a radio channel condition reporting unit reporting information indicative of a radio channel condition at a reception timing in discontinuous reception.

2. The mobile station as claimed in claim 1, further comprising:
a discontinuous reception control unit performing discontinuous reception at a predetermined cycle based on a downlink control channel.

3. The mobile station as claimed in claim 1, wherein the radio channel condition reporting unit reports the radio channel condition a predetermined time before the reception timing.

4. A base station comprising:
a data channel generation unit generating a data channel; and
a transmission control unit applying link adaptation depending on a radio channel condition reported from a mobile station a predetermined time before a transmission timing and transmitting the data channel.

5. The base station as claimed in claim 4, further comprising:
a control channel generation unit generating a control channel, the control channel storing information indicative of presence of transmitted data therein,
wherein the transmission control unit applies the link adaptation depending on the radio channel condition and transmits the control channel.

6. The base station as claimed in claim 4, wherein the control channel generation unit generates information indicative of a demodulation and decoding scheme for the data channel.

7. A method of reporting a radio channel condition, the method comprising the steps of:
a mobile station reporting information indicative of a radio channel condition depending on a reception timing in discontinuous reception;
a base station generating a data channel; and
the base station applying link adaptation depending on the radio channel condition reported from the mobile station a predetermined time before a transmission timing and transmitting the data channel.

8. The method as claimed in claim 7, further comprising the step of:
the base station generating a control channel indicative of presence of transmitted data;
wherein the step of transmitting the data channel comprises applying the link adaptation depending on the radio channel condition and transmitting the control channel.

9. The method as claimed in claim 7, wherein the step of reporting the radio channel condition comprises reporting the radio channel condition a predetermined time before the reception timing.

10. The method as claimed in claim 7, wherein the step of generating the control channel comprises generating information indicative of a demodulation and decoding scheme for the data channel.
